# FASCICULE DE BREVET EUROPEEN

(11) **EP 3 083 378 B1**
(45) Date de publication et mention de la délivrance du brevet: **22.05.2019**
(21) Numéro de dépôt: 14827808.8
(22) Date de dépôt: 09.12.2014
(51) Int. Cl.: B62D 43/04

(54) **ATTACHE DE PANIER DE ROUE DE SECOURS EN SOUS CAISSE**
BEFESTIGUNGSELEMENT ZUR BEFESTIGUNG EINES ERSATZRADHALTERS AN EINER BODENGRUPPE
FASTENER FOR FASTENING A SPARE WHEEL CRADLE TO AN UNDERBODY

(30) Priorité: 20.12.2013 FR 1363172
(43) Date de publication de la demande: 26.10.2016
(73) Titulaire: Renault S.A.S., 92100 Boulogne-Billancourt (FR)
(72) Inventeur: DELAUNAY, Guillaume, F-28500 Vernouillet (FR)
(86) Numéro de dépôt international: PCT/FR2014/053234
(87) Numéro de publication internationale: WO 2015/092214

(56) Documents cités:
- DE-U1- 8 804 878
- FR-A1- 2 695 098
- JP-U- H0 277 189
- JP-U- S6 030 883
- JP-U- S56 105 486

## Description

L'invention relève du domaine de l'automobile, et plus particulièrement de celui des dispositifs pour loger une roue de secours sous un véhicule automobile.

Une roue de secours d'un véhicule est généralement maintenue sous le plancher du véhicule au moyen d'un support lui-même suspendu sous la caisse ou le châssis du véhicule. Un tel support est actionnable de manière à libérer la roue de secours lorsque cette dernière doit être utilisée. De tels supports sont par exemple décrits dans FR 2 924 669, dans FR 2 723 715, dans JP S60 30883 U et dans JP H02 77189U.

Les supports de roue de secours disposés en sous face des caisses de véhicule automobile sont soumis à des conditions de fonctionnement difficiles. Les supports sont par exemple sujets à de fortes vibrations, chocs, projections, conditions corrosives, etc. Quelle qu'en soit l'origine, y compris lors de la fabrication ou du montage, un dysfonctionnement ou une rupture d'une liaison entre un tel support et le reste du véhicule présente un risque élevé. Lorsque de tels incidents surviennent sous un véhicule en roulage, les conséquences sur la sécurité des passagers du véhicule et des autres usagers de la route peuvent être sérieuses.

L'invention vient remédier aux inconvénients précités.

La demanderesse propose un ensemble de retenue d'une roue de secours d'un véhicule automobile comprenant :
- un panier comprenant une zone de liaison fixée de manière amovible en sous face du véhicule automobile, ledit panier étant apte à loger une roue de secours d'un véhicule automobile, le panier étant monté à pivotement entre une position fermée dans laquelle la manipulation d'une roue de secours est empêchée et une position ouverte dans laquelle la manipulation de la roue de secours est permise,
- un support de panier comprenant une zone de liaison fixée en sous face du véhicule automobile et une partie formant pivot pour le panier.

L'ensemble comprend en outre au moins un organe de retenue du support de panier et/ou du panier. L'organe de retenue comprend une portion de rattrapage s'étendant sous la zone de liaison du support de panier ou du panier, notamment lorsque le véhicule automobile est en position de roulage.

L'ensemble de retenue peut présenter les caractéristiques suivantes, seules ou en combinaison :
- l'organe de retenue du support panier et/ou du panier est fixé en sous face du véhicule automobile. Notamment, l'organe de retenue du panier est fixé de manière amovible, par exemple par vissage, en sous face du véhicule automobile. Cet organe de retenue du panier peut notamment faire partie d'un verrou agencé pour verrouiller le panier en position fermée.
- La zone de liaison du support de panier est fixée en sous face du véhicule automobile au moins en partie par soudage. Une telle fixation est rapide à mettre en oeuvre et compatible avec les chaînes montage existantes dans le domaine automobile.
- La zone de liaison du support de panier est fixée en sous face du véhicule automobile au moins en partie par vissage et/ou sertissage. Une telle fixation est aisément réparable en cas de dysfonctionnement.
- La portion de rattrapage de l'organe de retenue présente une forme de crochet. Un tel crochet forme un siège stable pour loger la zone de liaison du support de panier.
- L'organe de retenue comprend une plaque métallique pliée. La fabrication d'un tel organe est rapide et peu coûteuse. Aucune pièce complexe supplémentaire n'est nécessaire.
- L'organe de retenue et le support de panier ou le panier sont soudés l'un à l'autre. L'organe de retenue et le support de panier ou le panier peuvent être assemblés indépendamment du reste du véhicule. Leur positionnement mutuel est préétabli et le risque d'erreur lors du montage sur la caisse du véhicule est réduit.
- L'organe de retenue est réalisé d'une pièce. La présence de point d'assemblage pouvant présenter une fragilité est évité. Le nombre d'opérations à la fabrication est limité.
- La portion de rattrapage de l'organe de retenue est agencée pour être active seulement lorsque la fixation du support de panier ou du panier en sous face du véhicule automobile est déficiente ou lorsque la fixation de la zone de liaison à l'organe de retenue est déficiente. Avant rupture éventuelle d'une première liaison mécanique, la portion de rattrapage est épargnée et ne subit pas de contrainte significative. La fatigue de la pièce est évitée. La durée de vie est augmentée.
- La portion de rattrapage de l'organe de retenue entoure au moins partiellement la zone de liaison du support de panier ou du panier, de sorte qu'en cas de déficience de la fixation de ladite zone de liaison du support de panier ou du panier en sous face du véhicule automobile ou qu'en cas de déficience de la fixation de ladite zone de liaison au support de panier ou au panier, la portion de rattrapage s'oppose à la chute du panier. Le panier est mieux maintenu, en particulier lors du roulage du véhicule.

D'autres caractéristiques, détails et avantages de l'invention apparaîtront à la lecture de la description détaillée ci-après, et des dessins annexés, sur lesquels :
- la figure 1 est une vue en perspective d'un ensemble selon l'invention et sur laquelle le plancher du véhicule et la roue de secours ne sont pas représentés ;

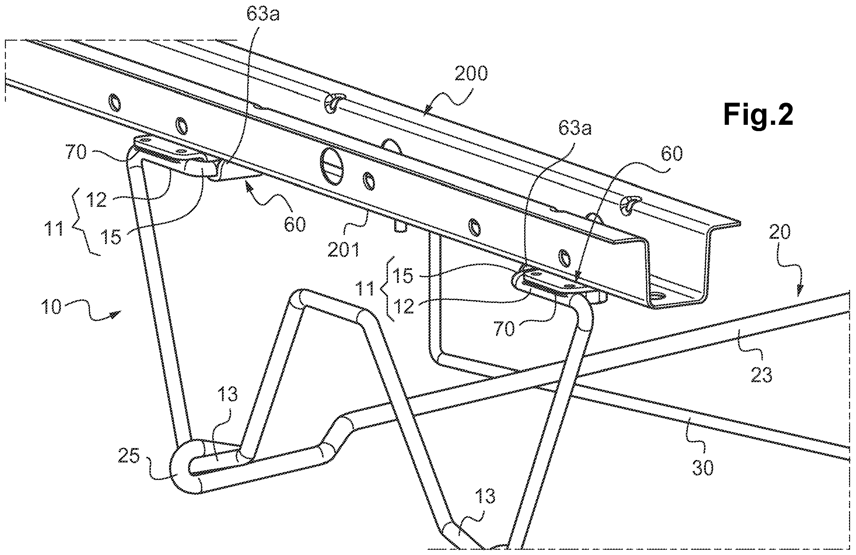

- la figure 2 est une vue de détail de l'ensemble de la figure 1 depuis un point de vue opposé à celui de la figure 1 ;
- la figure 3 est une vue en perspective et de détail d'une partie d'un ensemble selon l'invention ;
- la figure 4 est une vue du détail de la figure 3 depuis un point de vue différent de celui de la figure 3 ;
- la figure 5 est une vue en perspective et de détail d'une partie d'un ensemble selon l'invention ; et
- la figure 6 est une vue du détail de la figure 5 depuis un point de vue différent de celui de la figure 5.

Les dessins et descriptions ci-après contiennent, pour l'essentiel, des éléments de caractère certain. Ils pourront donc non seulement servir à mieux faire comprendre la présente invention, mais aussi contribuer à sa définition, le cas échéant.

Dans la suite, les termes définissant des positionnements relatifs tels que "haut", "bas", "horizontal", "vertical" et "sous" sont utilisés dans un contexte où les roues du véhicule automobile reposent de manière classique sur un sol sensiblement horizontal. On désigne ici par "surface inférieure", des surfaces situées en sous face de la caisse du véhicule et généralement orientée vers le sol.

Par sensiblement parallèle, perpendiculaire ou à angle droit, on entend une direction/un angle s'écartant d'au plus ±20°, voire d'au plus 10° ou d'au plus 5°, d'une direction parallèle, perpendiculaire ou d'un angle droit.

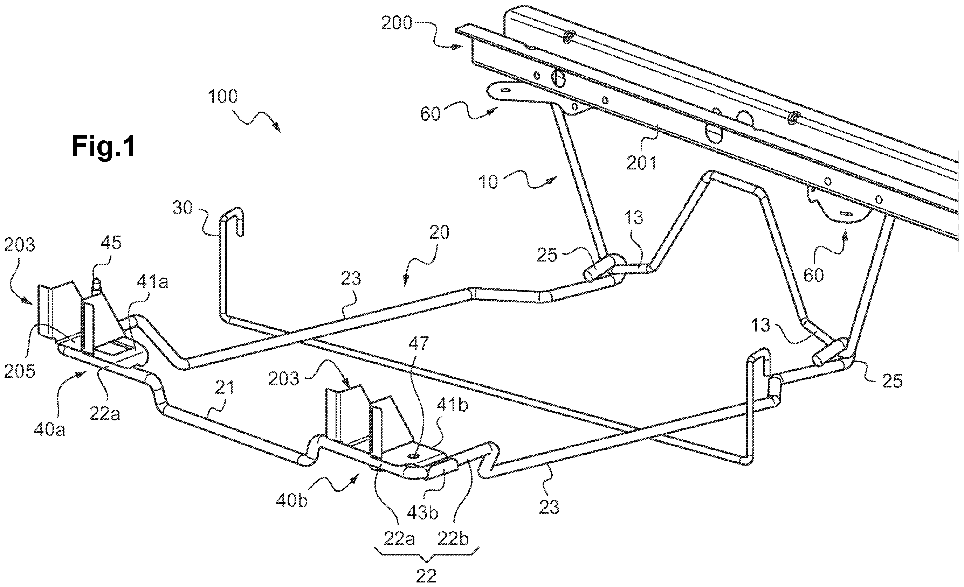

Sur la figure 1, une traverse 200 appartenant à la caisse du véhicule est représentée. Pour faciliter la compréhension, le reste de la caisse du véhicule n'est pas représenté. La traverse 200 porte des surfaces inférieures 201 en sous face du véhicule. L'ensemble de retenue d'une roue de secours du véhicule automobile est référencé 100. L'ensemble 100 comprend un support de panier 10, un panier 20, deux organes de retenue 40a, 40b du panier 20 et deux organes de retenue 60 du support de panier 10 similaires et optionnellement un limiteur de position latérale 30. L'ensemble 100 présente une configuration sensiblement symétrique selon un plan vertical perpendiculaire à la direction latérale (gauche-droite) du véhicule.

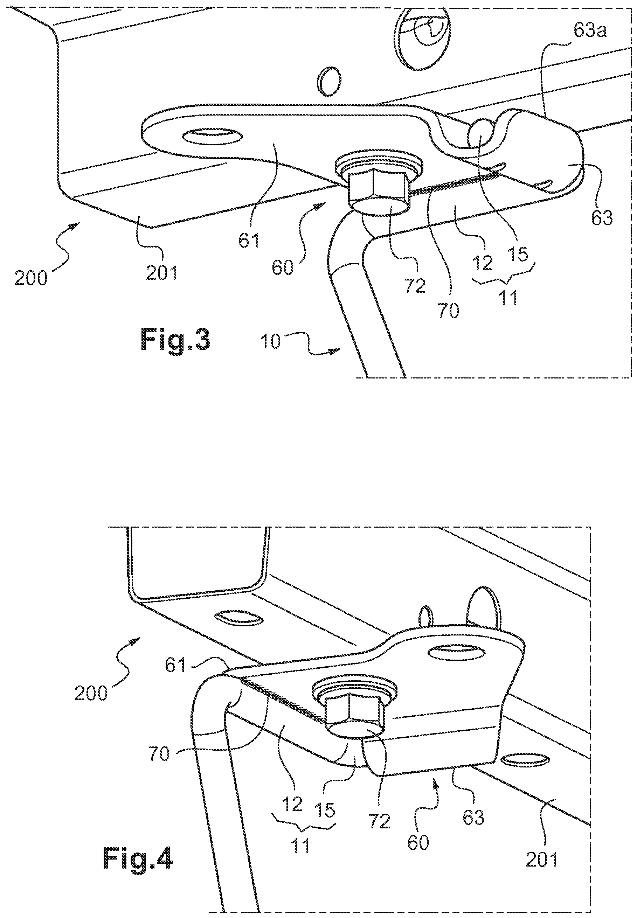

Dans l'exemple décrit ici, le support de panier 10 comprend un fil métallique rigide. Le fil métallique prend une forme générale de "W" obtenue par pliage du fil métallique rigide. Le support de panier 10 comprend, à chacune des portions d'extrémités du fil métallique, une zone de liaison 11. La zone de liaison 11 se décompose en une partie d'attache 12 et une partie d'extrémité libre 15. Les parties d'attaches 12 sont fixées à une surface inférieure 201 de la traverse 200 du véhicule automobile, cf. figures 3 et 4. Le support de panier 10 comprend en outre deux parties formant pivot 13 en zone basse de la forme en "W". Les parties formant pivot 13 sont situées en partie basse du support de panier 10 par rapport aux parties d'attache 12 et aux parties d'extrémité libre 15 situées en partie haute du support de panier 10.

Le panier 20 forme un logement de roue de secours d'un véhicule automobile. Dans l'exemple décrit ici, le panier 20 comprend un fil métallique rigide. Le panier 20 est formé par pliage du fil métallique rigide de manière à conférer au panier 20 une forme générale de "U".

Le panier 20 comprend une branche centrale 21, et deux branches latérales 23 s'étendant sensiblement à la perpendiculaire de la partie centrale 21 et parallèlement de façon générale l'une par rapport à l'autre. Les deux branches latérales 23 se prolongent chacune, à leur extrémité libre opposée à la branche centrale 21, par un palier 25. Chaque palier 25 correspond à l'une des deux portions d'extrémité du fil métallique rigide et est formé par pliage des portions d'extrémité en forme de boucle. Chaque boucle est disposée autour d'une partie formant pivot 13 correspondante du support de panier 10. Les boucles peuvent être enfilées, ou directement formées par pliage, autour des pivots 13. Les pivots 13 du support de panier 10 et les paliers 25 du panier 20 coopèrent pour pivoter le panier 20 par rapport au support de panier 10. Le panier 20 pivote autour d'un axe géométrique sensiblement parallèle à la traverse 200. Le panier 20 est suspendu au support de panier 10 par l'intermédiaire des assemblages palier 25/pivot 13.

Le panier 20 est pivotable entre une position fermée dans laquelle la manipulation d'une roue de secours est empêchée et une position ouverte dans laquelle la manipulation de la roue de secours est permise. Par manipulation de la roue, on entend ici l'insertion d'une roue de secours dans le logement formé par le panier 20 ou l'extraction d'une roue de secours depuis le logement formé par le panier 20 suivant les situations. Lorsqu'une roue de secours est logée dans le panier 20, la roue de secours repose sur chacune des branches latérales 23 du panier 20. La branche centrale 21 du panier 20 fait office de poignée lors du pivotement. En position ouverte, la branche centrale 21 est en position basse. En position fermée, la branche centrale 21 est en position haute.

Le panier 20 comprend en outre à chacune des intersections de ses branches latérales 23 et de sa branche centrale 21, une zone de liaison 22 comprenant une partie d'attache 22a et une partie libre 22b. Les parties d'attaches 22a sont fixées de manière amovible en sous face du véhicule automobile.

Dans l'exemple décrit ici, le limiteur de position latérale 30 comprend un fil métallique rigide en forme de "U" obtenu par pliage du fil. Le limiteur de position latérale 30 comprend deux branches courtes s'étendant sensiblement à la verticale depuis la sous face du véhicule et dont les extrémités basses se prolongent sensiblement à angle droit et se rejoignent par une troisième branche plus longue s'étendant sensiblement selon la direction latérale du véhicule. La troisième branche est disposée perpendiculairement sous chacune des branches latérales 23 du panier 20. Le limiteur de position latérale 30 est conformé pour positionner la roue de secours latéralement, autrement dit sensiblement parallèlement à une direction transversale du véhicule, et éviter ainsi toute interférence entre la roue de secours et le dessous de caisse du véhicule lors de la manipulation du panier 20. Les extrémités repliées des branches courtes forment une zone non agressive pour l'opérateur en usine.

Le support de panier 10, le panier 20 et le limiteur de position latérale 30 sont, ici, réalisés par pliage d'un fil métallique similaire. Dans des variantes des fils métalliques différents peuvent être utilisés pour le support de panier 10, le panier 20 et le limiteur de position latérale 30. La fabrication par pliage permet d'éviter la création de liaisons fragiles telles que des points de soudure. Les différentes pièces peuvent être réalisées à partir d'autres matériaux, par exemple des matières plastiques et/ou sous forme de tubes, de barres conformées ou même de fils souples. Le support de panier 10, le panier 20 et/ou le limiteur position latérale 30 peuvent, en variante, être fabriqués par assemblage de plusieurs pièces. Par ailleurs, certaines parties peuvent être recouvertes d'un revêtement pour améliorer la résistance à la corrosion et/ou éviter les bruits de type cliquetis résultant des vibrations du véhicule. Des organes facilitant le pivotement tel que des bagues ou des roulements peuvent être prévus entre les paliers 25 et les pivots 13.

Il est maintenant fait référence aux figures 3 et 4. L'organe de retenue 60 est ici réalisé par pliage d'une plaque métallique, ou platine. En variante, l'organe de retenue 60 peut être réalisé par moulage, emboutissage et/ou usinage. L'organe de retenue 60 comprend une portion de fixation 61 et une portion de rattrapage 63, ou patte.

La portion de fixation 61 présente une forme sensiblement plane. La portion de fixation 61 est pourvue de deux trous traversant dont l'un accueille une vis 72. La portion de fixation 61 est, ici, en contact avec une surface inférieure 201 du véhicule. La surface inférieure 201 du véhicule est, ici, portée par la traverse 200. La portion de fixation 61 est maintenue contre la surface inférieure 201 par la vis 72. La vis 72 est engagée dans la traverse 200 et dans un écrou correspondant (non visible sur les figures). L'écrou est en appui contre la traverse 200. En variante, l'écrou peut être solidaire de la traverse 200, par exemple y être soudé. La fixation de l'organe de retenue 60 en sous face du véhicule par une fixation amovible, tel qu'un couple vis-écrou, permet de démonter l'organe de retenue 60 et l'ensemble 100 du reste du véhicule si besoin. En variante, l'organe de retenue 60 peut être fixée de manière définitive au reste du véhicule, par exemple par soudage ou collage.

La partie d'attache 12 de la zone de liaison 11 est orientée sensiblement parallèle à la traverse 200. La partie d'attache 12 de la zone de liaison 11 est orientée sensiblement selon une direction latérale du véhicule. La partie d'extrémité libre 15 prolonge la partie d'attache 12 sensiblement à angle droit. La partie d'extrémité libre 15 s'étend sensiblement selon une direction perpendiculaire à la traverse 200. La partie d'extrémité libre 15 s'étend sensiblement selon une direction longitudinale (avant-arrière) du véhicule. L'angle sensiblement droit entre la partie d'attache 12 et la partie d'extrémité libre 15 de la zone de liaison 11 est obtenu par pliage du fil métallique lors de la mise en forme du support de panier 10.

La partie d'attache 12 est fixée en sous face du véhicule. Dans l'exemple décrit ici, cette fixation est indirecte : la partie d'attache 12 est fixée par soudage contre l'organe de retenue 60. L'organe de retenue 60 est fixé, à une surface inférieure 201 de la traverse 200. Cette fixation indirecte facilite le montage : la fixation entre le support de panier 10 et l'organe de retenue 60 peut être réalisée préalablement à l'installation sous la caisse du véhicule, puis dans un second temps l'organe de retenue 60 solidaire du support de panier 10 peut être fixé à la caisse du véhicule. En variante, le support de panier 10 est fixé directement en sous face du véhicule, par exemple directement contre la surface inférieure 201 de la traverse 200.

La partie d'attache 12 est rendue solidaire de la traverse 200 et donc de la caisse du véhicule. Ici, cette fixation est obtenue par soudage de la partie d'attache 12 à une surface orientée vers le bas de la portion d'attache 61 de l'organe de retenue 60. Un cordon de soudure porte la référence 70 sur les figures. Cette fixation constitue une liaison mécanique entre le support de panier 20 et la caisse ou le châssis du véhicule.

Dans des variantes, la liaison mécanique peut être obtenue par d'autres moyens que le soudage, par exemple collage, emboutissage, rivetage, vissage et/ou tout autre moyen adapté en fonction des contraintes techniques.

La portion de rattrapage 63 vient en supplément de la liaison mécanique entre la partie d'attache 12 et la surface inférieure 201 pour prévenir une anomalie de la liaison mécanique. Par portion de rattrapage 63, on entend ici une portion qui a pour fonction de rattraper, c'est-à-dire d'empêcher la chute, du support de panier 10 dans une situation d'incident où une fixation du support de panier 10 en sous face du véhicule viendrait à défaillir. La portion de rattrapage 63 fait alors office de redondance mécanique à la fixation entre la partie d'attache 12 et la surface inférieure 201.

La portion de rattrapage 63 présente, ici, une forme de crochet. La portion de rattrapage 63 forme saillie vers le bas par rapport au plan de la portion de fixation 61. La portion de rattrapage 63 présente une surface concave orientée vers le haut. La surface concave forme un siège pour recevoir la partie d'extrémité libre 15 du support de panier 10. La forme et les dimensions de la portion de rattrapage 63 sont adaptées en correspondance de la forme et des dimensions de la zone de liaison 11 et en particulier de la partie d'extrémité libre 15 du support de panier 10 qu'elle loge à l'état installé. La portion de rattrapage 63 s'étend sous la zone de liaison 11, et en particulier sous la partie d'extrémité libre 15, du support de panier 10. Dans l'exemple décrit ici, l'espace intérieur défini par la portion de rattrapage 63 est de forme générale allongée perpendiculairement à la traverse 200, c'est-à-dire sensiblement selon une direction longitudinale du véhicule. L'espace intérieur forme une gorge. La gorge présente une section sensiblement constante selon la direction longitudinale. La section de la gorge est sensiblement arrondie avec un diamètre supérieur ou égal au diamètre du fil métallique constituant la partie d'extrémité libre 15 de la zone de liaison 11 du support de panier 10.

La partie d'extrémité libre 15 de la zone de liaison 11 du support de panier 10, à l'état installé, est logée au dessus de la portion de rattrapage 63, ici dans la gorge arrondie. Tant que la liaison mécanique entre la partie d'attache 12 et la surface inférieure 201 du véhicule est efficace, à savoir la liaison entre la partie d'attache 12 et l'organe de retenue 60 dans le présent exemple, la portion de rattrapage 63 est inactive. La partie d'extrémité libre 15 peut être en contact ou à faible distance au-dessus de la portion de rattrapage 63. Le support de panier 10 est supporté par l'intermédiaire de la liaison mécanique, ici le cordon de soudure 70 et la partie d'attache 12, qui est donc sollicitée en traction. En cas de déficience de cette liaison mécanique, par exemple la rupture du cordon de soudure 70, la partie d'attache 12 tombe et la partie d'extrémité libre 15 est rattrapée par la portion de rattrapage 63. La chute complète du support de panier 10 est évitée. La partie d'extrémité libre 15 repose alors sur la portion de rattrapage 63. Autrement dit, la partie d'attache 12 de la zone de liaison 11 forme une première liaison mécanique en fonctionnement normal et la partie d'extrémité libre 15 de la zone de liaison 11 forme une seconde liaison mécanique en secours et en cas de dysfonctionnement de la première liaison mécanique.

Une extrémité libre 63a de la portion de rattrapage 63 est recourbée vers le haut. Dans l'exemple décrit ici, l'extrémité libre 63a est recourbée vers le haut sensiblement jusqu'au plan de la portion de fixation 61. À l'état fixé contre la surface inférieure 201 de la traverse 200, l'extrémité libre 63a de la portion de rattrapage 63 vient en contact ou à faible distance de la surface inférieure 201. Autrement dit, la portion de rattrapage 63 s'étend sous la partie d'extrémité libre 15 de la zone de liaison 11 et l'entoure partiellement. Ainsi, la chute de la partie d'extrémité libre 15 depuis le logement formé dans la portion de rattrapage 63 par translation et/ou glissement selon une direction sensiblement latérale est empêchée. L'extrémité libre 63a de la portion de rattrapage 63 fait office de rebord antichute. En variante, la portion de rattrapage 63 est disposée sous la zone de liaison 11. La gorge entoure la partie d'extrémité libre 15 sur 90° à 180° de la section.

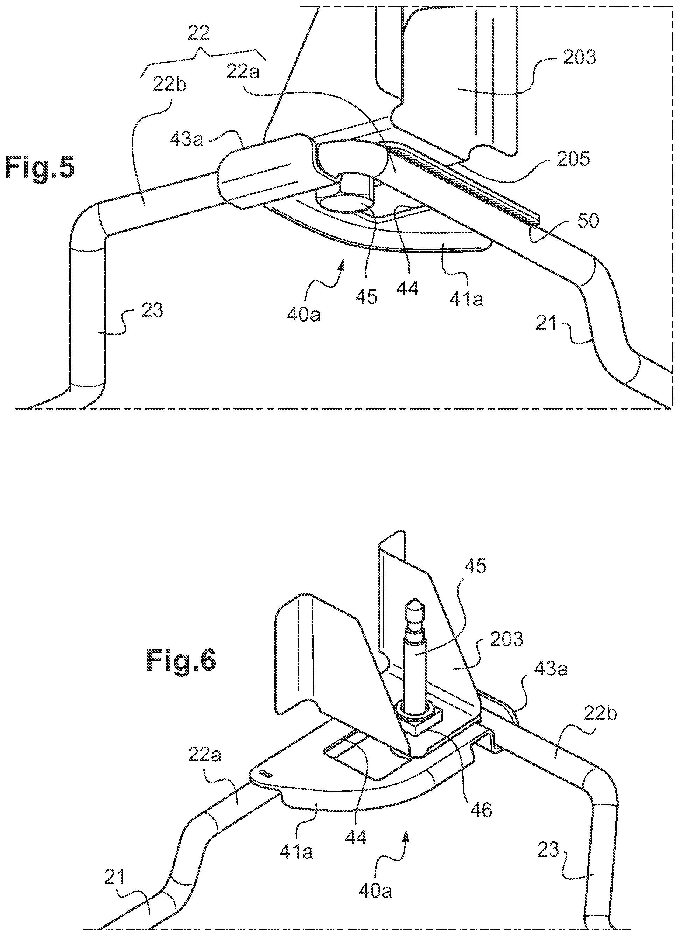

Il est maintenant fait référence aux figures 5 et 6. L'ensemble 100 de retenue comprend en outre au moins un organe de retenue du panier 20 disposé du côté du panier 20 opposé aux pivots 13. Pour faciliter l'accès à la roue de secours par un utilisateur, la branche centrale 21 faisant office de poignée et les organes de retenue du panier 20 sont situés à proximité de l'extrémité arrière du véhicule.

Dans l'exemple représenté, l'ensemble 100 comprend un organe de retenue gauche 40a du panier 20 et un organe de retenue droite 40b du panier 20. Les organes de retenue 40a, 40b sont fixés de manière amovible en sous face du véhicule automobile. Deux équerres 203 solidaires de la caisse du véhicule sont représentées sur les figures. Les faces orientées vers le bas des équerres constituent ici des surfaces inférieures 205 appartenant à la sous face du véhicule.

Les organes de retenue 40a et 40b sont similaires à l'organe de retenue 60 du support de panier 10 décrit en référence aux figures 3 et 4. Chaque organe de retenue 40a, 40b est ici réalisé par pliage d'une plaque métallique, ou platine. En variante, l'organe de retenue 40a, 40b peut être réalisé par moulage, emboutissage et/ou usinage.

Chaque organe de retenue 40a, 40b comprend une portion de fixation 41a, 41b, respectivement, et une portion de rattrapage 43a, 43b, respectivement, ou patte.

Chaque portion de fixation 41a, 41b présente une forme sensiblement plane. La portion de fixation 41a de l'organe de retenue gauche 40a est pourvue d'une ouverture traversante 44. La portion de fixation 41b de l'organe de retenue droite 40b est également pourvue d'un trou traversant 47 recevant une vis (non représentée sur les figures). Les portions de fixation 41a, 41b sont fixées à une surface inférieure 205 du véhicule automobile. La portion de fixation gauche 41a est fixée au moyen de la vis 45. La vis 45 traverse la portion de fixation gauche 41a et s'engage dans un écrou 46 supporté par l'équerre 203. La portion de fixation droite 41b est fixée par une autre vis non représentée à la surface inférieure 205 de l'équerre 203.

La fixation entre les portions de fixation 41a, 41b et la surface inférieure 25 du véhicule est amovible. Par dévissage complet des vis côtés droit et gauche, les portions de fixation gauche 41a et droite 41b peuvent être désolidarisées des équerres 203. Le panier 20 peut alors être pivoté vers sa position d'ouverture.

Dans le mode de réalisation représenté sur les figures, le dévissage complet de la vis 45 côté gauche est superflu. Un desserrage de la vis 45 suffit pour permettre le coulissement manuel de la portion de fixation 41a par rapport à la surface inférieure 205. Un tel coulissement de la portion de fixation 41a (vers la gauche de la figure 5) et une déformation élastique du panier 20 suffisent à aligner la vis 45 et l'ouverture 44 de la portion de fixation 41a. L'ouverture 44 est de dimension supérieure à la tête de vis 45. Ainsi, la portion de fixation 41 peut être retirée vers le bas en faisant passer la tête de la vis 45 au travers de l'ouverture 44. La vis 45 reste engagée dans l'écrou correspondant solidaire de l'équerre 203. La chute au sol et la perte de la vis 45 sont évitées. Dans une variante, la vis 45 est agencée pour rendre impossible un dévissage complet et le retrait de la vis 45. Les différences entre les ouvertures 46, 47 des deux portions de fixation 41a et 41b forment une exception au caractère symétrique de l'ensemble 100.

Tel que déjà mentionné, les zones de liaison 22 du panier 20 sont fixées de manière amovible en sous face du véhicule automobile. Dans l'exemple décrit ici, cette fixation est indirecte, ce qui permet de faciliter le montage, tel que déjà mentionné pour l'organe de retenue 60. La partie d'attache 22a est fixée par soudage contre l'organe de retenue gauche 40a lui-même fixé de manière amovible à une surface inférieure 205 du véhicule, tel que déjà décrit. Ici, la partie d'attache 22a est fixée à une surface orientée vers le bas de la platine 41a de l'organe de retenue gauche 40a par un cordon de soudure 50 (figure 5). Cette fixation constitue une liaison mécanique entre le panier 20 et la caisse ou le châssis du véhicule. La fixation de la partie d'attache 22a à la portion de fixation 41b de l'organe de retenue droit 40b est similaire. Dans des variantes, la liaison mécanique peut être obtenue par d'autres moyens, par exemple par collage, emboutissage, vissage et/ou tout autre moyen adapté.

Chaque organe de retenue 40a, 40b du panier 20 présente une portion de rattrapage 43a, 43b, respectivement, similaire à la portion de rattrapage 63 de l'organe de liaison 60, qui vient en supplément de la liaison mécanique entre la partie d'attache 22a et la surface inférieure 205 pour prévenir une anomalie de la liaison mécanique. Ainsi, les portions de rattrapage 43a, 43b ont également pour fonction d'empêcher la chute du panier dans une situation où une fixation du panier 20 en sous face du véhicule viendrait à défaillir.

Dans le présent exemple, les portions de rattrapage 43a, 43b, identiques à la portion de rattrapage 63, s'étendent sous la zone de liaison 22 et présentent une surface concave orientée vers le haut et recevant la partie libre 22b de la zone de liaison 22 du panier 20. Dans l'exemple décrit ici, l'espace intérieur défini par la portion de rattrapage 43a, 43b est de forme allongée et s'étend également sensiblement selon une direction longitudinale du véhicule. L'invention n'est cependant pas limitée à cette orientation. Les dimensions de la gorge formée par l'espace intérieur sont similaires à celles de la partie de rattrapage 63 de l'organe de retenue 60.

Ainsi, la partie libre 22b de la zone de liaison 22 du panier, à l'état installé, est logée au dessus de la portion de rattrapage 43a, 43b. Tant que la liaison mécanique entre la partie d'attache 22a et la surface inférieure 205 est efficace, à savoir ici la liaison entre la partie d'attache 22a et l'organe de retenue 43a, 43b, la portion de rattrapage 43a, 43b est inactive. La partie libre 22b peut être en contact ou à faible distance au dessus de la portion de rattrapage 43a, 43b. Le panier 20 est supporté par l'intermédiaire de la liaison mécanique, ici le cordon de soudure 50 et la partie d'attache 22a, qui est sollicitée en traction. En cas de déficience de cette liaison mécanique, par exemple rupture du cordon de soudure 50, la partie d'attache 22a tombe et la partie libre 22b est rattrapée par la portion de rattrapage 43a, 43b, évitant la chute complète du panier 20.

La portion de rattrapage 43a, 43b peut également présenter une extrémité libre conformée pour faire office de rebord antichute, comme la portion de rattrapage 63 de l'organe de retenue 60.

Les portions de fixation 41a, 41b et les portions de rattrapage 43a, 43b respectivement des organes de retenue 40a, 40b décrits ici présentent des similitudes de forme avec les portions de fixation 61 et les portions de rattrapage 63 des organes de retenue 60. Cela permet de faciliter la fabrication des pièces, par exemple en utilisant les mêmes matériaux de base, tels que des plaques métalliques dans lesquelles sont découpées et percées les pièces avant d'être pliées. Les organes de retenue 40a, 40b et 60 ont pour fonction commune de supporter le poids du support de panier 10, du panier 20 et de la roue de secours qui y est logée. Cependant, les organes de retenue 40a, 40b sont opérables par un utilisateur pour libérer le panier 20 alors que les organes de retenue 60 ont pour fonction de retenir le support de panier 10, en toutes circonstances (hors démontage pour maintenance ou réparation).

Les organes de retenue 40a, 40b du panier 20 forment ainsi ici un verrou agencé pour verrouiller le panier 20 en position fermée.

Grâce à la redondance mécanique permise par la portion de rattrapage 63, 43a, 43b, le véhicule peut continuer de rouler car le panier 20 est maintenu, même en cas de défaillance de la liaison mécanique entre la partie d'attache 12 et la surface inférieure 201 et/ou entre la partie d'attache 22a et la surface inférieure 205. Un risque majeur pour la sécurité, une immobilisation immédiate du véhicule et une réparation urgente sont évités.

L'invention ne se limite pas aux ensembles décrits ci-avant, seulement à titre d'exemples, mais elle englobe toutes les variantes que pourra envisager l'homme de l'art dans le cadre des revendications ci-après.

## Revendications

1. Ensemble (100) de retenue d'une roue de secours d'un véhicule automobile comprenant :
- un panier (20) comprenant une zone de liaison (22) fixée de manière amovible en sous face (205) du véhicule automobile, ledit panier (20) étant apte à loger une roue de secours d'un véhicule automobile, le panier (20) étant monté à pivotement entre une position fermée dans laquelle la manipulation d'une roue de secours est empêchée et une position ouverte dans laquelle la manipulation de la roue de secours est permise,
- un support de panier (10) comprenant une zone de liaison (11) fixée en sous face (201) du véhicule automobile et une partie formant pivot (13) pour le panier (20),
**caractérisé en ce que** l'ensemble (100) comprend en outre au moins un organe de retenue (60, 40a, 40b) du support de panier (10) et/ou du panier (20), l'organe de retenue (60, 40a, 40b) comprenant une portion de rattrapage (63, 43a, 43b) s'étendant sous la zone de liaison (11, 22) du support de panier (10) ou du panier (20), dans lequel l'organe de retenue (60, 40a, 40b) du support panier (10) et/ou du panier (10) est fixé en sous face (201, 205) du véhicule automobile et dans lequel la portion de rattrapage (63, 43a, 43b) de l'organe de retenue (60, 40a, 40b) étant agencée pour être active seulement lorsque la fixation de la zone de liaison (11, 22) à l'organe de retenue (60, 40a, 40b) est déficiente.

2. Ensemble (100) selon la revendication 1, dans lequel la zone de liaison (11) du support de panier (10) est fixée en sous face (201) du véhicule automobile au moins en partie par soudage.

3. Ensemble (100) selon l'une des revendications précédentes, dans lequel la zone de liaison (11) du support de panier (10) est fixée en sous face (201) du véhicule automobile au moins en partie par vissage et/ou sertissage.

4. Ensemble (100) selon l'une des revendications précédentes, dans lequel la portion de rattrapage (63, 43a, 43b) de l'organe de retenue (60, 40a, 40b) présente une forme de crochet.

5. Ensemble (100) selon l'une des revendications précédentes, dans lequel l'organe de retenue (60, 40a, 40b) comprend une plaque métallique pliée.

6. Ensemble (100) selon l'une des revendications précédentes, dans lequel l'organe de retenue (60, 40a, 40b) et le support de panier (10) ou le panier (20) sont soudés l'un à l'autre.

7. Ensemble (100) selon l'une des revendications précédentes, dans lequel l'organe de retenue (60, 40a, 40b) est réalisé d'une pièce.

8. Ensemble (100) selon l'une des revendications précédentes, dans lequel la portion de rattrapage (63, 43a, 43b) de l'organe de retenue (60, 40a, 40b) entoure au moins partiellement la zone de liaison (11, 22) du support de panier (10) ou du panier (20), de sorte qu'en cas de déficience de la fixation de ladite zone de liaison (11, 22) au support de panier (10) ou au panier (20), la portion de rattrapage (63, 43a, 43b) s'oppose à la chute du panier (20).

## Patentansprüche

1. Anordnung (100) zum Halten eines Ersatzrads eines Kraftfahrzeugs, umfassend:
- einen Korb (20) umfassend einen Verbindungsbereich (22), der abnehmbar auf einer Unterseite (205) des Kraftfahrzeugs befestigt ist, wobei der Korb (20) geeignet ist, ein Ersatzrad eines Kraftfahrzeugs aufzunehmen, wobei der Korb (20) schwenkbar zwischen einer geschlossenen Position, in der die Handhabung eines Ersatzrads verhindert wird, und einer offenen Position, in welcher die Handhabung des Ersatzrads gestattet ist, angebracht ist,
- einen Korbträger (10) umfassend einen Verbindungsbereich (11), der an einer Unterseite (201) des Kraftfahrzeugs befestigt ist, und einen Schwenkabschnitt (13) für den Korb (20),
**dadurch gekennzeichnet, dass** die Anordnung (100) ferner mindestens ein Halteelement (60, 40a, 40b) des Korbträgers (10) und/oder des Korbs (20) umfasst, das Halteelement (60, 40a, 40b) umfassend einen Aufnahmeabschnitt (63, 43a, 43b), der sich unter dem Verbindungsbereich (11, 22) des Korbträgers (10) oder des Korbs (20) erstreckt, wobei das Halteelement (60, 40a, 40b) des Korbträgers (10) und/oder des Korbs (10) an einer Unterseite (201, 205) des Kraftfahrzeugs befestigt ist, und wobei der Aufnahmeabschnitt (63, 43a, 43b) des Halteelements (60, 40a, 40b) angeordnet ist, nur dann aktiv zu sein, wenn die Befestigung des Verbindungsbereichs (11, 22) an dem Halteelement (60, 40a, 40b) mangelhaft ist.

2. Anordnung (100) nach Anspruch 1, wobei der Verbindungsbereich (11) des Korbträgers (10) zumindest teilweise durch Schweißen an einer Unterseite (201) des Kraftfahrzeugs befestigt ist.

3. Anordnung (100) nach einem der vorhergehenden Ansprüche, wobei der Verbindungsbereich (11) des Korbträgers (10) zumindest teilweise durch Verschrauben und/oder Crimpen an einer Unterseite (201) des Kraftfahrzeugs befestigt ist.

4. Anordnung (100) nach einem der vorhergehenden Ansprüche, wobei der Aufnahmeabschnitt (63, 43a, 43b) des Halteelements (60, 40a, 40b) eine Hakenform aufweist.

5. Anordnung (100) nach einem der vorhergehenden Ansprüche, wobei das Halteelement (60, 40a, 40b) eine gebogene Metallplatte umfasst.

6. Anordnung (100) nach einem der vorhergehenden Ansprüche, wobei das Halteelement (60, 40a, 40b) und der Korbträger (10) oder der Korb (20) aneinandergeschweißt sind.

7. Anordnung (100) nach einem der vorhergehenden Ansprüche, wobei das Halteelement (60, 40a, 40b) einstückig ausgeführt ist.

8. Anordnung (100) nach einem der vorhergehenden Ansprüche, wobei der Aufnahmeabschnitt (63, 43a, 43b) des Halteelements (60, 40a, 40b) den Verbindungsbereich (11, 22) des Korbträgers (10) oder des Korbs (20) zumindest teilweise umgibt, so dass bei einer mangelhaften Befestigung des Verbindungsbereichs (11, 22) an dem Korbträger (10) oder an dem Korb (20) der Aufnahmeabschnitt (63, 43a, 43b) dem Fall des Korbs (20) entgegenwirkt.

## Claims

1. Assembly (100) for retention of a spare wheel of a motor vehicle, comprising:
- a cradle (20), comprising a connection area (22) which is secured in a removable manner on the underface (205) of the motor vehicle, said cradle (20) being able to accommodate a spare wheel of a motor vehicle, the cradle (20) being fitted such as to pivot between a closed position, in which the handling of a spare wheel is prevented, and an open position, in which the handling of the spare wheel is permitted;
- a cradle support (10), comprising a connection area (11) which is secured on the underface (201) of the motor vehicle, and a part which forms a pivot (13) for the cradle (20),
**characterized in that** the assembly (100) additionally comprises at least one unit (60, 40a, 40b) for retention of the cradle support (10) and/or of the cradle (20), the retention unit (60, 40a, 40b) comprising a take-up portion (63, 43a, 43b) which extends below the connection area (11, 22) of the cradle support (10) or the cradle (20), wherein the unit (60, 40a, 40b) for retention of the cradle support (10) and/or of the cradle (10) is secured on the underface (201, 205) of the motor vehicle and wherein the take-up portion (63, 43a, 43b) of the retention unit (60, 40a, 40b) is designed to be active only when the securing of the connection area (11, 22) on the retention unit (60, 40a, 40b) is defective.

2. Assembly (100) according to Claim 1, wherein the connection area (11) of the cradle support (10) is secured on the underface (201) of the motor vehicle at least partly by welding.

3. Assembly (100) according to either of the preceding claims, wherein the connection area (11) of the cradle support (10) is secured on the underface (201) of the motor vehicle at least partly by screwing and/or clamping.

4. Assembly (100) according to one of the preceding claims, wherein the take-up portion (63, 43a, 43b) of the retention unit (60, 40a, 40b) is in the form of a hook.

5. Assembly (100) according to one of the preceding claims, wherein the retention unit (60, 40a, 40b) comprises a bent metal plate.

6. Assembly (100) according to one of the preceding claims, wherein the retention unit (60, 40a, 40b) and the cradle support (10) or the cradle (20) are welded to one another.

7. Assembly (100) according to one of the preceding claims, wherein the retention unit (60, 40a, 40b) is made in a single piece.

8. Assembly (100) according to one of the preceding claims, wherein the take-up portion (63, 43a, 43b) of the retention unit (60, 40a, 40b) surrounds at least partially the connection area (11, 22) of the cradle support (10) or of the cradle (20), such that, in the event of a defect in the securing of said connection area (11, 22) on the cradle support (10) or on the cradle (20), the take-up portion (63, 43a, 43b) opposes the fall of the cradle (20).
